# EUROPEAN PATENT SPECIFICATION

(11) **EP 3 069 826 B1**
(45) Date of publication and mention of the grant of the patent: **05.07.2017**
(21) Application number: 15159315.9
(22) Date of filing: 17.03.2015
(51) Int. Cl.: B25B 27/00, B60T 17/22, F16D 65/00, F16D 65/38

(54) **FAST-POSITIONING BRAKE SLAVE CYLINDER ADJUSTER**
SCHNELLPOSITIONIERENDE BREMSNEHMERZYLINDERNACHSTELLVORRICHTUNG
RÉGLEUR DE CYLINDRE RÉCEPTEUR DE FREIN À POSITIONNEMENT RAPIDE

(43) Date of publication of application: 21.09.2016
(73) Proprietor: Poul Chang Metal Industry Co., Ltd., Taichung City 41146 (TW)
(72) Inventor: Huang, Chia-Hao, Taichung City 41146 (TW)
(74) Representative: Viering, Jentschura & Partner mbB Patent- und Rechtsanwälte

(56) References cited:
- DE-U1- 20 116 934
- GB-A- 2 504 007
- GB-A- 2 517 599
- US-A- 4 903 391
- US-A- 5 003 681
- US-A- 5 018 261
- US-A- 5 269 053
- US-A1- 2005 015 981
- US-A1- 2012 216 380
- US-A1- 2013 047 424
- US-A1- 2015 033 914
- US-B1- 6 192 566
- US-B1- 7 155 792

## Description

### BACKGROUND OF THE INVENTION

### 1. Field of the Invention:

The present invention relates to brake slave cylinder adjusters, and more particularly, to a fast-positioning brake slave cylinder adjuster.

### 2. Description of the Related Art:

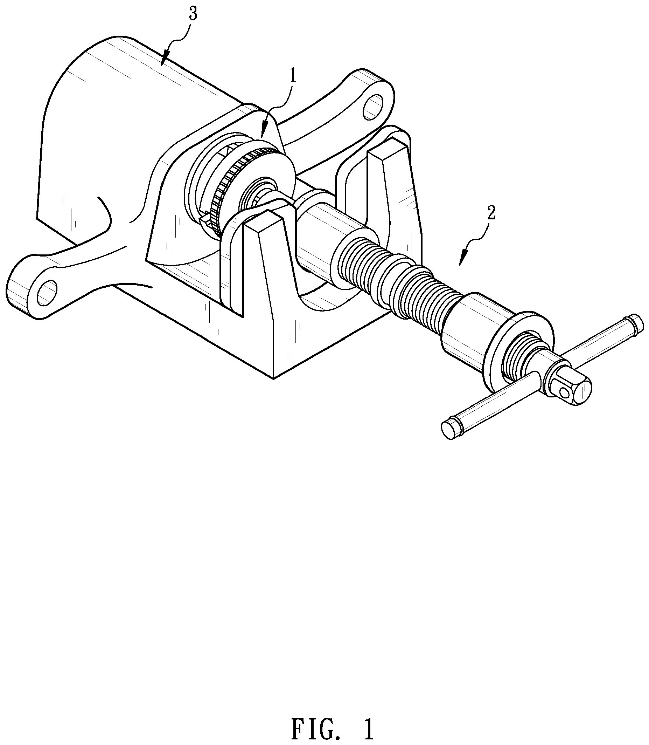

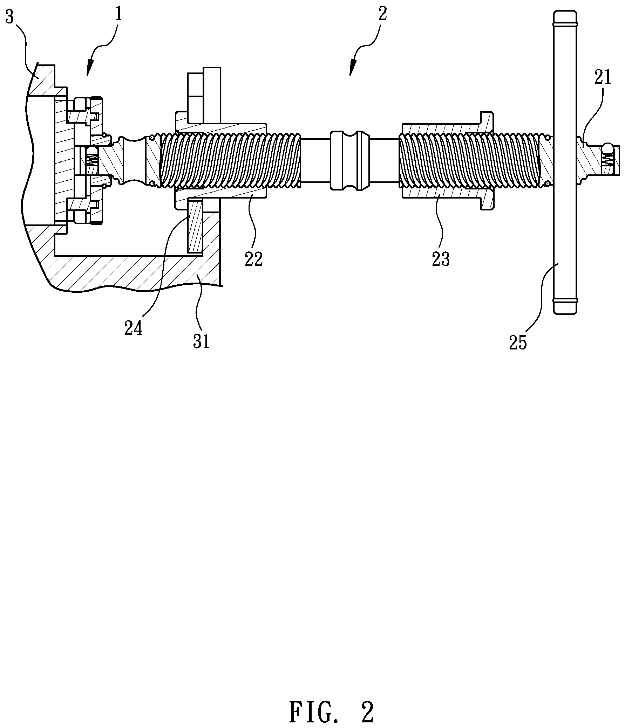

Referring to **Fig. 1** and **Fig. 2****,** a conventional brake slave cylinder adjuster is disclosed, mainly for pressing the piston of a brake slave cylinder **3** back to the piston chamber, such that the maintenance of new brake linings is facilitated. Therein, the brake slave cylinder adjuster comprises an engaging unit **1**, and a driving unit **2** combined to the engaging unit **1** for rotationally driving the engaging unit **1.** The engaging unit **1** is axially combined to the brake slave cylinder **3.** The driving unit **2** is formed of a rod **21**, a left positioning sleeve **22**, a right positioning sleeve **23**, a positioning baffle **24**, and a grip **25**.

Therein, when the device is applied for adjusting the brake slave cylinder **3** on the left side of a car, the engaging unit **1** is connected to an end of the rod **21**, so as to connect the brake slave cylinder **3**; also, the positioning baffle **24** is engaged with the left positioning sleeve **22**, and the left positioning sleeve **22** is stopped against an engaging seat **31** disposed on the outer periphery of the slave cylinder, thereby driving the grip **25** for pressing the piston into the slave cylinder. Similarly, when the device is applied for adjusting the brake slave cylinder **3** on the right side of the car, the positioning baffle **24** is engaged with the right positioning sleeve **23**; also, the right positioning sleeve **23** is stopped against an engaging seat **31** disposed on the outer periphery of the slave cylinder, thereby driving the grip **25** for pressing the piston into the slave cylinder. With the cooperation of the two positioning sleeves, a single rod **21** and the driving unit **2** are applied to adjust the brake slave cylinders **3** on the left and right sides of the car.

Such conventional structure is allowed to be used for adjusting either the left or right brake slave cylinder of a vehicle; however, two positioning sleeves with different directions of thread are necessarily required, so that the manufacturing cost remains higher. Also, when adjusting by use of the left positioning sleeve **22** or right positioning sleeve **23** on the rod **21**, the rotation is only accomplished in a manner of a gradually round-by-round rotation, so that the operation period is longer.

Such an adjuster is known for example from the US 2015/0033914 A1.

### SUMMARY OF THE INVENTION

For improving aforementioned issues, the present invention discloses a fast-positioning brake slave cylinder adjuster, which applies a single positioning sleeve mounted around a driving rod with a clutch mechanism, so as to effectively being positioned, thus facilitating the adjusting process.

For achieving the objectives above, the present invention provides a fast-positioning brake slave cylinder adjuster, comprising:
a driving rod, with two combining parts disposed on two ends thereof, respectively, for combining a driving disk, so as to connect a brake slave cylinder, while the driving rod is provided with a first thread section and a second thread section, and the two threads thereof have different thread directions;
an operation grip, transversely passing through one end of the driving rod for driving the driving rod;
a positioning sleeve, mounted around the driving rod and able to be clutched with the driving rod, such that when the positioning sleeve is de-clutched with the driving rod, the positioning sleeve is able to axially move along the driving rod effectively, and when the positioning sleeve is clutched with the driving rod, the positioning sleeve is screwedly mounted around the first thread section or the second thread section; and
a baffle, mounted around the outer periphery of the positioning sleeve.

Preferably, the positioning sleeve is formed by a thread seat and a fixing seat coupled together into a barrel shape, and half of the inner wall of the thread seat is provided with an inner thread for being screwedly mounted around the first thread section or the second thread section.

With such configuration, the positioning sleeve is allowed to be clutched with the driving rod, such that the cylinder adjuster is effectively positioned, so as to facilitate the adjusting process and save the time cost.

### BRIEF DESCRIPTION OF THE DRAWINGS

**Fig. 1** is a perspective view of a conventional brake slave cylinder adjuster applied for adjusting a brake slave cylinder.
**Fig. 2** is a sectional schematic view of a conventional brake slave cylinder adjuster applied for adjusting a brake slave cylinder.
**Fig. 3** is a perspective view of a brake slave cylinder adjuster in accordance with the present invention.
**Fig. 4** is an exploded view of the brake slave cylinder adjuster in accordance with the present invention.
**Fig. 5** is a schematic view illustrating the positioning sleeve in a clutched status in accordance with the present invention.
**Fig. 6** is a schematic view illustrating the positioning sleeve in a de-clutched status in accordance with the present invention.
**Fig. 7** is a schematic view illustrating the status of the positioning sleeve during an adjusting operation in accordance with the present invention.
**Fig. 8** is a perspective view of the brake slave cylinder adjuster combined with a driving disk in accordance with the present invention.
**Fig. 9** is a perspective view of the brake slave cylinder adjuster for adjusting a left brake slave cylinder of a vehicle.
**Fig. 10** is a sectional schematic view illustrating the brake slave cylinder adjuster for adjusting a left brake slave cylinder of a vehicle.

### DETAILED DESCRIPTION OF THE INVENTION

The aforementioned and further advantages and features of the present invention will be understood by reference to the description of the preferred embodiment in conjunction with the accompanying drawings where the components are illustrated based on a proportion for explanation but not subject to the actual component proportion.

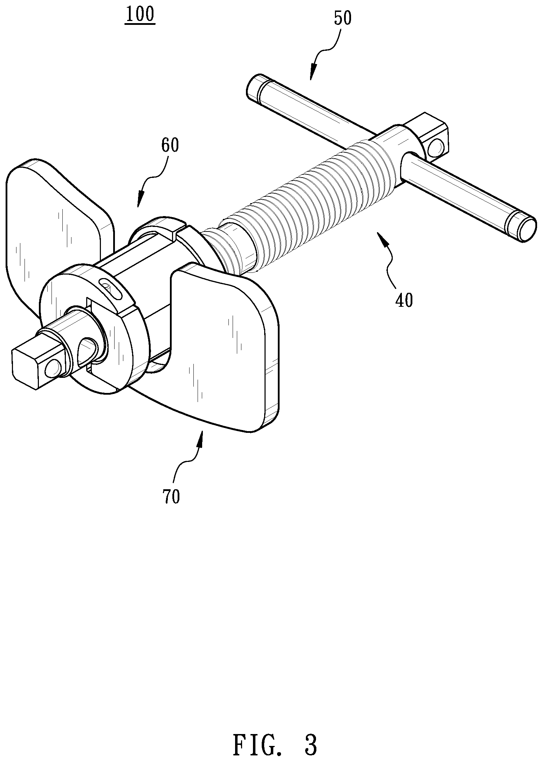

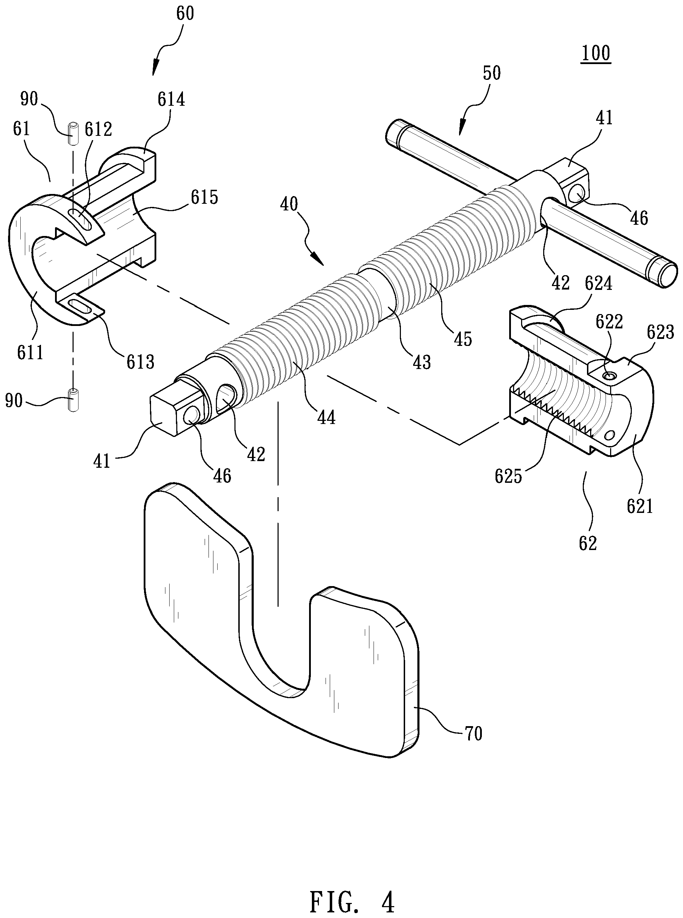

Referring to **Fig. 3** to **Fig. 10****,** the present invention provides a fast-positioning brake slave cylinder adjuster **100,** comprising a driving rod **40,** an operation grip **50,** a positioning sleeve **60,** and a baffle **70.**

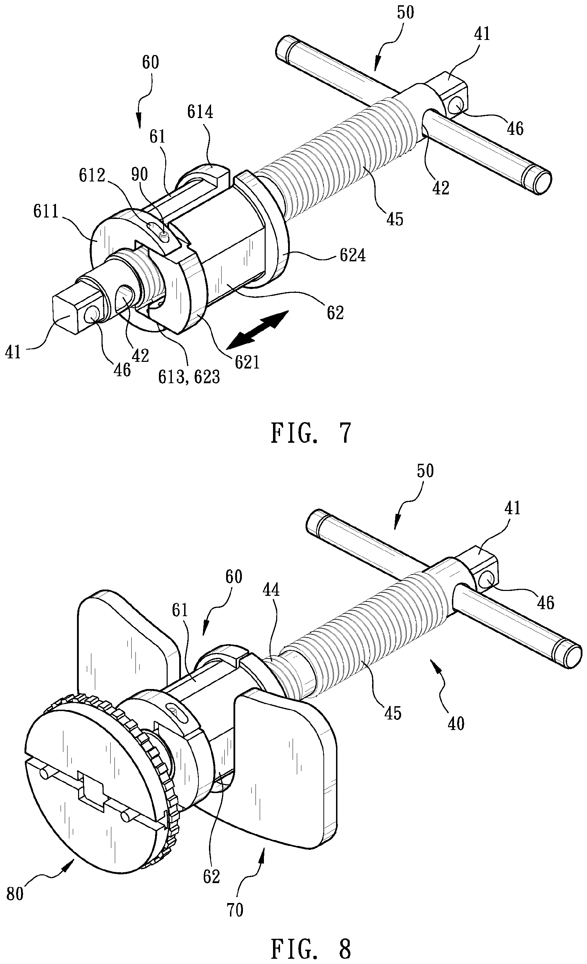

Two ends of the driving rod **40** are provided with a combining part **41,** respectively, for combining a driving disk **80** in order to engage a brake slave cylinder **200,** as shown in **Fig. 8** to **Fig. 10****.** A through hole **42** is disposed on a lateral side of each of the combining parts **41** of the driving rod **40,** respectively. Moreover, an interval **43** is disposed on the middle section of the driving rod **40,** so as to partition the two sides of the driving rod **40** into a first thread section **44** and a second thread section **45.** In the embodiment provided by the present invention, the directions of the thread on the first thread section **44** and the second thread section **45** are different. In the preferred embodiment, the rotational direction of the thread on the first thread section **44** is counter clockwise, while the rotational direction of the thread on the second thread section **45** is clockwise. Furthermore, each of the combining parts **41** of the driving rod **40** is embedded with a resiliently stretchable positioning ball **46,** respectively, so as to resiliently engage the driving disk **80.**

The operation grip **50** transversely passes through one of the two through holes **42** of the driving rod **40** for driving the driving rod **40.**

The positioning sleeve **60** is mounted around the driving rod **40** and capable of clutching the driving rod **40.** In the embodiment provided by the present invention, the positioning sleeve **60** is in a barrel shape, which is formed of a fixing seat **61** and a thread seat **62.** The fixing seat **61** has one end thereof provided with a first block edge **611,** while two sides of the first block edge **611** are provided with a groove **612,** respectively. Also, two sides of the inner edge of the first block edge **611** are provided with a flat surface **613,** respectively. The other end of the fixing seat **61** opposed to the first block edge **611** is provided with a first convex edge **614**. Further, the inner edge of the fixing seat **61** is axially provided with a semi-barrel hole **615.**

The thread seat **62** has one end provided with a second block edge **621** corresponding to the first block edge **611,** while the second block edge **621** is provided with two combining bores **622** corresponding to the two grooves **612,** such that two positioning pins **90** pass through the two grooves **612** and two combining bores **622.** In addition, two sides of the second block edge **621** of the thread seat **62** are provided with an outer lateral surface **623,** respectively, for matching a corresponding flat surface **613;** also, the thread seat **62** is further provided with a second convex edge **624** corresponding to the first convex edge **614.** Therein, inner wall of the thread seat **62** has an inner thread **625** corresponding to the semi-barrel hole **615,** wherein the thread pitch of the inner thread **625** allows the inner thread **625** to be screwedly mounted around the first thread section **44** or the second thread section **45.** Therefore, the thread seat **62** and the fixing seat **61** form a barrel shape to be mounted around the periphery of the driving rod **40,** wherein the thread seat **62** and the fixing seat **61** are able to be transversely engaged with or disengaged from each other. Therein, when the thread seat **62** and the fixing seat **61** are de-clutched against the driving rod **40,** the positioning sleeve **60** is allowed to axially move along the driving rod **40** effectively, so as to adjust the positioning sleeve **60** onto the first thread section **44** or the second thread section **45**. When the thread seat **62** and the fixing seat **61** are clutched against the driving rod **40,** the thread seat **62** is allowed to be screwedly mounted around the first thread section **44** or the second thread section **45.**

The baffle **70** is mounted around the outer periphery of the positioning sleeve **60.**

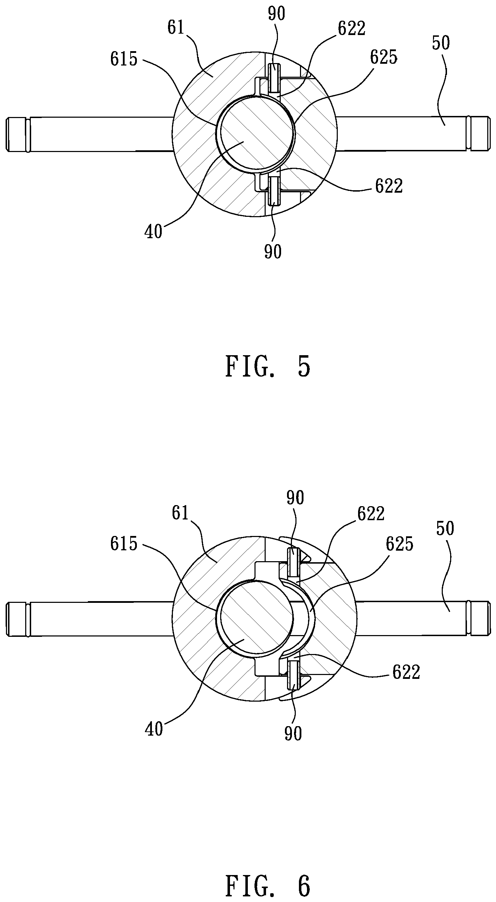

Referring to **Fig. 5** to **Fig. 7****,** before the adjusting process is carried out, the thread seat **62** and the fixing seat **61** are transversely pulled outward against the driving rod **40,** thereby de-clutching the positioning sleeve **60** from the driving rod **40,** so as to axially adjust the positioning sleeve **60** along the driving rod **40** onto the first thread section **44** or the second thread section **45.** Next, the user pushes the thread seat **62** and the fixing seat **61** toward the driving rod **40,** thereby re-clutching the thread seat **62** and the fixing seat **61** with the driving rod **40,** such that the thread seat **62** is screwedly mounted around the driving rod **40** to be positioned.

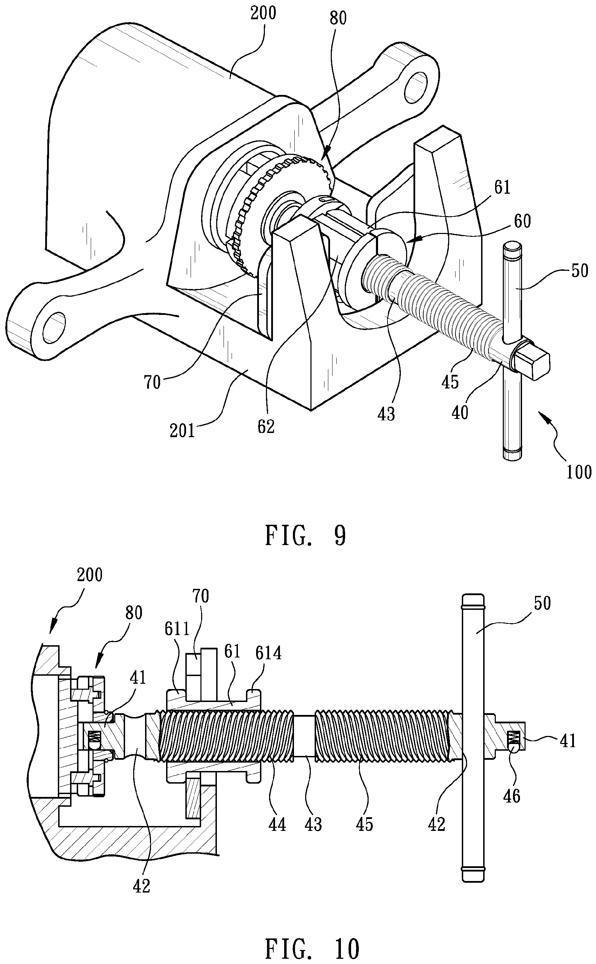

Referring to **Fig. 9** to **Fig. 10****,** with the steps aforementioned, the positioning sleeve **60** is adjusted to an appropriate position; for example, the positioning sleeve **60** is positioned to the first thread section **44** (on the left side of the drawing), such that the brake slave cylinder adjuster **100** of the present invention is applied for adjusting the brake slave cylinder **200** on the left side of the vehicle. During the adjusting process, an appropriately chosen driving disk **80** is engaged with the left end of the driving rod **40.** The baffle **70** is mounted around the outer periphery of the positioning sleeve **60,** and is subsequently engaged with an engaging seat **201** of the brake slave cylinder **200,** whereby the driving disk **80** is engaged with the brake slave cylinder **200.** The operation grip **50** is combined to the right end of the driving rod **40,** such that the operation grip **50** is operated to drive the driving rod **40** to rotate and move toward the left side. With such operation, the driving disk **80** presses the piston of the brake slave cylinder **200** back to the original position, whereby the adjustment of the brake slave cylinder **200** on the left side of the vehicle is accomplished. Similarly, when adjusting the brake slave cylinder **200** on the right side of the vehicle, the operation method is same with the method of adjusting the left side brake slave cylinder **200**.

Therefore, the brake slave cylinder adjuster **100** provided by the present invention needs only one positioning sleeve **60** to facilitate the position adjustment of the left side or right side brake slave cylinder **200** of a vehicle. In other words, components of the brake slave cylinder adjuster **100** provided by the present invention are simplified, lowering the manufacturing cost and price. Furthermore, the positioning sleeve **60** is formed of the fixing seat **61** and the thread seat **62**, and capable of being clutched with the driving rod **40**, so as to be effectively positioned at the appropriate position, thereby facilitating the adjusting process and achieving a higher utility.

Although particular embodiments of the invention have been described in detail for purposes of illustration, various modifications and enhancements may be made without departing from the scope of the invention. Accordingly, the invention is not to be limited except as by the appended claims.

## Claims

1. A fast-positioning brake slave cylinder adjuster (100), comprising:
a driving rod (40), with two combining parts (41) disposed on two ends thereof, respectively, for combining a driving disk (80), so as to engage a brake slave cylinder (200), while the driving rod (40) is provided with a first thread section (44) and a second thread section (45), while directions of the first thread section (44) and the second thread section (45) are different;
an operation grip (50), transversely passing through one end of the driving rod (40) for driving the driving rod (40);
a positioning sleeve (60), mounted around the driving rod (40) and able to be clutched with the driving rod (40), such that when the positioning sleeve (60) is not clutched with the driving rod (40), the positioning sleeve (60) is able to axially move along the driving rod (40) effectively, and when the positioning sleeve (60) is clutched with the driving rod (40), the positioning sleeve (60) is allowed to be screwedly mounted around the first thread section (44) or the second thread section (45); and
a baffle (70), mounted around the outer periphery of the positioning sleeve (60).

2. The fast-positioning brake slave cylinder adjuster (100) of claim 1, wherein the positioning sleeve (60) is in a barrel shape formed of a thread seat (62) and a fixing seat (61).

3. The fast-positioning brake slave cylinder adjuster (100) of claim 2, wherein inner wall of the thread seat (62) is provided with an inner thread (625) for being screwedly mounted around the first thread section (44) or the second thread section (45).

4. The fast-positioning brake slave cylinder adjuster (100) of claim 2, wherein the thread seat (62) and the fixing seat (61) are combined with each other by use of two positioning pins (90).

5. The fast-positioning brake slave cylinder adjuster (100) of claim 4, wherein one end of the fixing seat (61) is provided with a first block edge (611), with two sides of the first block edge (611) provided with a groove (612), respectively, and the thread seat (62) is provided with a second block edge (621) corresponding to the first block edge (611), with two combining bores (622) disposed on the second block edge (621), while the two positioning pins (90) pass through the two grooves (612) and the corresponding two combining bores (622), respectively, such that the thread seat (62) and the fixing seat (61) are allowed to be transversely engaged with or disengaged from each other.

6. The fast-positioning brake slave cylinder adjuster (100) of claim 5, wherein one end of the fixing seat (61) opposed to the first block edge (611) is provided with a first convex edge (614), and the thread seat (62) is provided with a second convex edge (624) corresponding to the first convex edge (614).

7. The fast-positioning brake slave cylinder adjuster (100) of claim 5, wherein two sides of the inner edge of the first block edge (611) are provided with a flat surface (613), respectively, and two sides of the second block edge (621) are provided with an outer lateral surface (623) corresponding to the two flat surfaces (613), respectively.

8. The fast-positioning brake slave cylinder adjuster (100) of claim 1, wherein two ends of the driving rod (40) are provided with a through hole (42), respectively, for the operation grip (50) to selectively pass through one of the through holes (42).

9. The fast-positioning brake slave cylinder adjuster (100) of claim 1, wherein an interval (43) is disposed between the first thread section (44) and the second thread section (45).

## Patentansprüche

1. Schnellpositionierbremsnehmerzylindereinsteller (100), umfassend:
eine Antriebsstange (40) mit zwei jeweils an deren zwei beiden Enden angeordneten Kombinationsteilen (41) zum Kombinieren einer Antriebsscheibe (80), um einen Bremsnehmerzylinder (200) in Eingriff zu bringen, wobei die Antriebsstange (40) mit einem ersten Gewindeabschnitt (44) und einem zweiten Gewindeabschnitt (45) ausgebildet ist, wobei die Richtungen des ersten Gewindeabschnitts (44) und des zweiten Gewindeabschnitts (45) unterschiedlich sind,
einen Betätigungsgriff (50), der quer durch ein Ende der Antriebsstange (40) zum Antreiben der Antriebsstange (40) verläuft,
eine Positionierhülse (60), die um die Antriebsstange (40) herum montiert ist und mit der Antriebsstange (40) kuppelbar ist, so dass, wenn die Positionierhülse (60) nicht mit der Antriebsstange (40) gekuppelt ist, die Positionierhülse (60) axial wirksam entlang der Antriebsstange (40) bewegbar ist, und wenn die Positionierhülse (60) mit der Antriebsstange (40) gekuppelt ist, die Positionierhülse (60) verschraubend mit dem ersten Gewindeabschnitt (44) oder dem zweiten Gewindeabschnitt (45) montierbar ist, und
eine Trennplatte (70), die um den Außenumfang der Positionierhülse (60) herum montiert ist.

2. Schnellpositionierbremsnehmerzylindereinsteller (100) nach Anspruch 1, wobei die Positionierhülse (60) tonnenförmig durch einen Gewindesitz (62) und einen Befestigungssitz (61) ausgebildet wird.

3. Schnellpositionierbremsnehmerzylindereinsteller (100) nach Anspruch 2, wobei die Innenwand des Gewindesitzes (62) mit einem Innengewinde (625) ausgebildet ist, um verschraubend um den ersten Gewindeabschnitt (44) oder den zweiten Gewindeabschnitt (45) herum montiert zu werden.

4. Schnellpositionierbremsnehmerzylindereinsteller (100) nach Anspruch 2, wobei der Gewindesitz (62) und der Befestigungssitz (61) unter Verwendung von zwei Positionierstiften (90) miteinander verbunden sind.

5. Schnellpositionierbremsnehmerzylindereinsteller (100) nach Anspruch 4, wobei das Ende des Befestigungssitzes (61) mit einer ersten Blockkante (611) ausgebildet ist, wobei zwei Seiten der ersten Blockkante (611) jeweils mit einer Nut (612) und der Gewindesitz (62) mit einer der ersten Blockkante (611) entsprechenden zweiten Blockkante (621) ausgebildet ist, mit zwei an der zweiten Blockkante (621) angeordneten Kombinationsbohrungen (622), wobei die beiden Positionierstifte (90) durch die beiden Nuten (612) und die beiden jeweiligen Kombinationsbohrungen (622) so verlaufen, dass der Gewindesitz (62) und der Befestigungssitz (61) quer miteinander ein- oder auskuppelbar sind.

6. Schnellpositionierbremsnehmerzylindereinsteller (100) nach Anspruch 5, wobei ein der ersten Blockkante (611) gegenüberliegendes Ende des Befestigungssitzes (61) mit einer ersten konvexen Kante (614) und dem Gewinde ausgebildet ist und der Gewindesitz (62) mit einer der ersten konvexen Kante (614) entsprechenden zweiten konvexen Kante (624) ausgebildet ist.

7. Schnellpositionierbremsnehmerzylindereinsteller (100) nach Anspruch 5, wobei zwei Seiten der Innenkante der ersten Blockkante (611) jeweils mit einer ebenen Oberfläche (613) und zwei Seiten der zweiten Blockkante (621) mit einer äußeren Seitenfläche (623) ausgebildet sind, die den beiden ebenen Oberflächen (613) entsprechen.

8. Schnellpositionierbremsnehmerzylindereinsteller (100) nach Anspruch 1, wobei zwei Enden der Antriebstange (40) mit einem Durchgangsloch (42) ausgebildet sind, wobei der Betätigungsgriff (50) selektiv durch eines der Durchgangslöcher (42) verlaufen kann.

9. Schnellpositionierbremsnehmerzylindereinsteller (100) nach Anspruch 1, wobei zwischen dem ersten Gewindeabschnitt (44) und dem zweiten Gewindeabschnitt (45) ein Abstand (43) ausgebildet ist.

## Revendications

1. Régleur de cylindre récepteur de frein à positionnement rapide (100) comprenant :
une tige d'entraînement (40), avec deux parties de combinaison (41) disposées sur deux extrémités de celle-ci, respectivement, pour combiner un disque d'entraînement (80), de façon à engager un cylindre récepteur de frein (200), tandis que la tige d'entraînement (40) comporte une première section filetée (44) et une seconde section filetée (45), les directions de la première section filetée (44) et de la seconde section filetée (45) étant différentes ;
une poignée d'actionnement (50), passant transversalement à travers une extrémité de la tige d'entraînement (40) pour entraîner la tige d'entraînement (40) ;
un manchon de positionnement (60), monté autour de la tige d'entraînement (40) et apte à être mis en prise avec la tige d'entraînement (40) de telle sorte que, lorsque le manchon de positionnement (60) n'est pas mis en prise avec la tige d'entraînement (40), le manchon de positionnement (60) est apte à effectivement se déplacer axialement le long de la tige d'entraînement (40) et lorsque le manchon de positionnement (60) est mis en prise avec la tige d'entraînement (40), le manchon de positionnement (60) peut être monté par vissage autour de la première section filetée (44) ou de la seconde section filetée (45) ; et
un déflecteur (70), monté autour de la périphérie externe du manchon de positionnement (60).

2. Régleur de cylindre récepteur de frein à positionnement rapide (100) selon la revendication 1, dans lequel le manchon de positionnement (60) se présente sous une forme de fût formé d'un siège fileté (62) et d'un siège de fixation (61).

3. Régleur de cylindre récepteur de frein à positionnement rapide (100) selon la revendication 2, dans lequel une paroi interne du siège fileté (62) comporte un filetage interne (625) pour être monté par vissage autour de la première section filetée (44) ou de la seconde section filetée (45).

4. Régleur de cylindre récepteur de frein à positionnement rapide (100) selon la revendication 2, dans lequel le siège fileté (62) et le siège de fixation (61) sont combinés l'un à l'autre à l'aide de deux broches de positionnement (90).

5. Régleur de cylindre récepteur de frein à positionnement rapide (100) selon la revendication 4, dans lequel une extrémité du siège de fixation (61) comporte un premier bord de bloc (611), deux côtés du premier bord de bloc (611) comportant une rainure (612), respectivement, et le siège fileté (62) comporte un second bord de bloc (621) correspondant au premier bord de bloc (611), deux alésages de combinaison (622) étant ménagés sur le second bord de bloc (621), tandis que les deux broches de positionnement (90) passent à travers les deux rainures (612) et les deux alésages de combinaison correspondants (622), respectivement, de telle sorte que le siège fileté (62) et le siège de fixation (61) peuvent être engagés transversalement l'un avec l'autre et désengagés transversalement l'un de l'autre.

6. Régleur de cylindre récepteur de frein à positionnement rapide (100) selon la revendication 5, dans lequel une extrémité du siège de fixation (61) opposée au premier bord de bloc (611) comporte un premier bord convexe (614), et le siège fileté (62) comporte un second bord convexe (624) correspondant au premier bord convexe (614).

7. Régleur de cylindre récepteur de frein à positionnement rapide (100) selon la revendication 5, dans lequel deux côtés du bord interne du premier bord de bloc (611) comportent une surface plate (613), respectivement, et deux côtés du second bord de bloc (621) comportent une surface latérale externe (623) correspondant aux deux surfaces plates (613), respectivement.

8. Régleur de cylindre récepteur de frein à positionnement rapide (100) selon la revendication 1, dans lequel deux extrémités de la tige d'entraînement (40) comportent un trou traversant (42), respectivement, pour que la poignée d'actionnement (50) passe de manière sélective à travers l'un des trous traversant (42).

9. Régleur de cylindre récepteur de frein à positionnement rapide (100) selon la revendication 1, dans lequel un intervalle (43) est ménagé entre la première section filetée (44) et la seconde section filetée (45).
